# EUROPÄISCHE PATENTSCHRIFT

(11) **EP 2 773 857 B1**
(45) Veröffentlichungstag und Bekanntmachung des Hinweises auf die Patenterteilung: **20.04.2016**
(21) Anmeldenummer: 12772960.6
(22) Anmeldetag: 17.10.2012
(51) Int. Cl.: F01N 3/28, F01N 3/20, F01N 3/022, F01N 3/027

(54) **ABGASBEHANDLUNGSVORRICHTUNG**
EXHAUST-GAS TREATMENT DEVICE
DISPOSITIF DE TRAITEMENT DES GAZ D'ECHAPPEMENT

(30) Priorität: 04.11.2011 DE 102011117624
(43) Veröffentlichungstag der Anmeldung: 10.09.2014
(73) Patentinhaber: Continental Automotive GmbH, 30165 Hannover (DE)
(72) Erfinder: HIRTH, Peter, 51503 Rösrath (DE); HODGSON, Jan, 53840 Troisdorf (DE); BAUER, Peter, 53721 Siegburg (DE)
(86) Internationale Anmeldenummer: PCT/EP2012/070544
(87) Internationale Veröffentlichungsnummer: WO 2013/064373

(56) Entgegenhaltungen:
- US-A- 5 546 746

## Beschreibung

Die vorliegende Erfindung betrifft eine Abgasbehandlungsvorrichtung mit einem von einem Abgas durchströmbaren Wabenkörper, der mit zumindest teilweise strukturierten Blechlagen so gewickelt und/oder gestapelt ist, dass für ein Abgas in axialer Richtung von einer Einlassseite zu einer Auslassseite durchströmbare Kanäle gebildet werden. Insbesondere betrifft die Erfindung eine Abgasbehandlungsvorrichtung, die ein Heizelement umfasst, das durch Anlegen einer elektrischen Spannung das Abgas und/oder die Abgasbehandlungsvorrichtung aufheizt.

Um die Emission von Schadstoffen von Verbrennungskraftmaschinen, insbesondere in Kraftfahrzeugen, zu begrenzen, werden seit langem katalytische Konverter zur Entgiftung des Abgases eingesetzt. Damit eine katalytisch unterstützte Umwandlung der Schadstoffe stattfindet, muss das Abgas und/oder der katalytische Konverter eine Mindesttemperatur aufweisen. Insbesondere nach Kaltstart oder Neustart der Verbrennungskraftmaschine ist diese Mindesttemperatur noch nicht erreicht. Es wird daher versucht, die Temperatur des Abgases und/oder des katalytischer Konverter durch elektrisch betriebene Heizelemente zu erhöhen.

In der WO 89/10471 ist ein Wabenkörper mit strukturierten Blechlagen beschrieben, bei der zumindest eine Blechlage durch Anlegen einer Spannung direkt beheizt wird. Bei dem Konzept wird somit eine den Wabenkörper bildende Blechlage als Heizelement eingesetzt.

Aus der WO 93/05284 und der US 5546746 hingegen ist bekannt, einen Heizdraht bzw. ein Heizelement zwischen zwei Blechlagen zu integrieren. Bei der Verwendung eines solchen Heizdrahtes muss allerdings aufwändig dafür gesorgt werden, dass benachbarte Blechlagen noch miteinander verlötet werden können. Der Heizdraht hat nämlich wesentlichen Einfluss auf die Form der Blechlagen beziehungsweise bewirkt einen Abstand benachbarter Blechlagen.

Es ist daher Aufgabe der vorliegenden Erfindung, die mit Bezug auf den Stand der Technik geschilderten Probleme zumindest teilweise zu lösen und insbesondere eine Abgasbehandlungsvorrichtung anzugeben, in die ein Heizelement integriert werden kann und die einfach herzustellen ist.

Gelöst wird diese Aufgabe durch eine Abgasbehandlungsvorrichtung mit den Merkmalen des unabhängigen Anspruchs 1. Vorteilhafte Weiterbildungen der Abgasbehandlungsvorrichtung sind in den abhängigen Ansprüchen und der Beschreibung angegeben.

Die Aufgabe wird insbesondere gelöst durch eine Abgasbehandlungsvorrichtung mit einem von einem Abgas durchströmbaren Wabenkörper, der mit zumindest teilweise strukturierten Blechlagen so gewickelt und/oder gestapelt ist, dass für ein Abgas in axialer Richtung von einer Einlassseite zu einer Auslassseite durchströmbare Kanäle gebildet werden. Ein erster Teil der Blechlagen endet bündig an einer der Einlassseite und/oder der Auslassseite zugeordneten ersten Stirnfläche und ein zweiter Teil der Blechlagen endet ebenfalls an einer der Einlassseite und/oder der Auslassseite zugeordneten zweiten Stirnfläche. Die zweite Stirnfläche weist einen Abstand zu der ersten Stirnfläche auf, wobei die zweite Stirnfläche mit Bezug zu der Einlassseite und/oder der Auslassseite im Inneren des Wabenkörpers ausgebildet ist, in dem eine erste Länge in Strömungsrichtung des ersten Teils Blechlagen größer ist als eine zweite Länge in Strömungsrichtung des zweiten Teils Blechlagen. Durch den Abstand zwischen der ersten Stirnfläche und der zweiten Stirnfläche wird eine Aufnahme ausgebildet, in der ein Heizelement angeordnet ist.

Die Abgasbehandlungsvorrichtung ist insbesondere zur Abgasreinigung von Abgasen einer Verbrennungskraftmaschine eines Kraftfahrzeugs ausgelegt und ist somit insbesondere in der Abgasleitung der Verbrennungskraftmaschine angeordnet. Der Wabenkörper ist aus zumindest teilweise strukturierten Blechlagen hergestellt, die während der Herstellung bevorzugt zunächst gestapelt werden, wobei sich strukturierte und glatte Blechlagen abwechseln, und anschließend gewickelt werden. Die Strukturierung der Blechlagen kann bevorzugt durch Aussparungen, Wellungen und/oder Leitschaufeln erreicht werden. Die Strukturierungen sind insbesondere so ausgelegt, dass in einem Querschnitt des Wabenkörpers mindestens 100 cpsi [cells per square inch], oder sogar mindestens 300 cpsi ausgebildet sind.

Der erste Teil der Blechlagen und der zweite Teil der Blechlagen können jeweils nur eine einzige Blechlage aufweisen oder aber auch eine Mehrzahl von Blechlagen. Bevorzugt ist allerdings, dass der erste Teil Blechlagen eine Vielzahl von Blechlagen aufweist und der zweite Teil der Blechlagen genau eine Blechlage aufweist. Bevorzugt endet der erste Teil Blechlagen hin zu der Einlassseite, wodurch eine Einlassfläche definiert wird, da genau in dieser Ebene das Abgas in die Kanäle des Wabenkörpers in Strömungsrichtung zuerst eintritt. Der zweite Teil der Blechlagen bildet in diesem Fall eine zweite Stirnfläche, die mit einem axialen Abstand zu der ersten Stirnfläche in Strömungsrichtung nach der zweiten Stirnfläche angeordnet ist, wobei die zweite Stirnfläche eine Einlassfläche in die von dem zweiten Teil Blechlagen gebildeten Kanäle bildet. Alternativ oder kumulativ bildet der erste Teil Blechlagen eine erste Stirnfläche an der Auslassseite, wobei die von dem zweiten Teil Blechlagen gebildete zweite Stirnfläche in Strömungsrichtung vor der ersten Stirnfläche angeordnet ist. Unter einer "Zuordnung" der Stirnflächen zu der Einlassseite oder der Auslassseite wird insbesondere verstanden, dass die jeweilige Stirnfläche näher oder sogar angrenzend zur Einlassseite / Auslassseite positioniert ist als zur gegenüberliegenden Auslassseite / Einlassseite.

Erfindungsgemäß ist die erste Länge in Strömungsrichtung des ersten Teils Blechlagen größer als die zweite Länge in Strömungsrichtung des zweiten Teils Blechlagen, was insbesondere bedeutet, dass der zweite Teil Blechlagen nicht über den ersten Teil Blechlagen hinaussteht. Bei der Herstellung werden also bevorzugt alle Blechlagen bündig an der Auslassseite angeordnet, wodurch sich an der Einlassseite ein Abstand zwischen der ersten Stirnfläche und der zweiten Stirnfläche ausbildet. In dieser durch den Abstand ausgebildeten Aufnahme kann das Heizelement angeordnet werden, welches insbesondere mit einer der Blechlagen verbunden, vorzugsweise verklebt, ist. Anschließend werden die Blechlagen und gegebenenfalls auch das Heizelement zu dem Wabenkörper aufgewickelt.

Das Heizelement wird insbesondere durch einen elektrischen Leiter gebildet, der von einem Isolator umgeben ist. Das Heizelement weist Anschlussstücke auf, die aus der Abgasleitung herausführbar sind und an die eine Spannungsversorgung angeschlossen werden kann. Der elektrische Leiter des Heizelements weist insbesondere eine Querschnittsfläche von mindestens 0,5 mm² [Quadratmillimeter], bevorzugt von mindestens 3 mm², besonders bevorzugt von mindestens 6 mm² auf. Das Heizelement ist in der Aufnahme ausgebildet und ist insbesondere mit mindestens einer Blechlage des Wabenkörpers verbunden, so dass das Heizelement unverlierbar in dem Wabenkörper befestigt ist. Es ist auch möglich, dass mehrere Heizelemente in die Aussparung integriert sind. Weiter ist auch möglich, dass eine Mehrzahl von Aussparungen ausgebildet ist und in diese jeweils mindestens ein Heizelement eingebracht ist. Falls mehrere Heizelemente vorgesehen sind, können diese vorzugsweise getrennt voneinander, ggf. in einer abgestimmten Weise, betrieben werden, so dass sich beispielsweise unterschiedlich einstellbare Heizzonen ausbilden lassen. Dies kann mit einer geeigneten Spannungsversorgung und Regeleinheit realisiert werden.

Durch die Erfindung ist eine einfach herzustellende Abgasbehandlungsvorrichtung gegeben, die elektrisch beheizbar ist. Das Heizelement kann auf einfache Weise während des Herstellungsprozesses der Abgasbehandlungsvorrichtung integriert werden, es ist aber auch möglich, das Heizelement nach Herstellung des Wabenkörpers in diesen zu integrieren.

Die Blechlagen weisen abwechselnd angeordnete glatte und gewellte Blechlagen auf, wobei der zweite Teil der Blechlagen nur gewellte Blechlagen umfasst. Das bedeutet insbesondere, dass der zweite Teil der Blechlagen nur genau eine gewellte Blechlage umfasst oder aber auch mehrere gewellte Blechlagen umfasst.

Dies hat zur Folge, dass die glatten Blechlagen zumindest über die gewellten Blechlagen des zweiten Teils der Blechlagen überstehen. Diese Aufnahme wird somit in einer radialen Richtung durch eine glatte Blechlage und in die entgegensetzte Richtung ebenfalls durch eine glatte Blechlage begrenzt. Das mindestens eine Heizelement ist somit bei einer Ausbildung der Aufnahme an der Einlassseite in Strömungsrichtung vor der zweiten Stirnfläche angeordnet. Vorteilhaft hierbei ist es, dass die glatten Blechlagen zur Unterstützung bzw. Einfassung des Heizelements dienen und das Abgas das Heizelement zunächst zumindest teilweise umströmen muss, damit es in die von dem zweiten Teil der Blechlagen gebildeten Kanäle eindringt. Ein guter Wärmeübertrag von dem Heizelement auf das Abgas ist somit gewährleistet.

Gemäß einer weiteren vorteilhaften Weiterbildung der Erfindung überdeckt das (mindestens eine) Heizelement die zweite Stirnfläche, bei Sicht in Strömungsrichtung, nur zu einem geringen Teil, nämlich zu höchstens 50 %, besonders bevorzugt zu höchstens 30 %, ganz besonders bevorzugt zu höchstens 10 %. Das Heizelement ist also in Strömungsrichtung vor oder hinter der zweiten Stirnfläche und hinter beziehungsweise vor der ersten Stirnfläche angeordnet. Somit ist gewährleistet, dass der Strömungswiderstand durch das Heizelement möglichst gering gehalten wird.

Bevorzugt ist zudem, dass das Heizelement an eine Blechlage des ersten Teils Blechlagen geklebt ist. Die elektrische Isolierung des Heizelements ist somit mit einer Blechlage - insbesondere einer glatten Blechlage des ersten Teils Blechlagen - stoffschlüssig verbunden. Es ist somit eine verlustsichere Verbindung zwischen dem Heizelement und dem Wabenkörper gegeben, wodurch auch eine Wärmeübertrag von dem Heizelement auf die Blechlage gewährleistet ist.

Es ist auch bevorzugt, dass eine glatte Blechlage des ersten Teils Blechlagen gefalzt ist und dass in der Falzung das Heizelement angeordnet ist.

Eine Falzung stellt insbesondere einen Abschnitt der Blechlage dar, der eine Art Tasche durch einen umgeklappten bzw. umgebogenen Blechabschnitt bildet. Die Anzahl und/oder Gestalt solcher Falzungen kann unter Berücksichtigung der Art und/oder der Anzahl der Heizelemente und/oder der Umformbarkeit der Blechlagen gewählt werden. Somit ist eine verlustsichere formschlüssige Verbindung zwischen Heizelement und Blechlagen des Wabenkörpers gegeben, insbesondere nach Art einer Einhüllung.

Es ist auch vorteilhaft, wenn der Abstand zwischen der ersten Stirnfläche und der zweiten Stirnfläche mindestens 0,1 cm [Zentimeter], vorzugsweise mindestens 0,3 cm beträgt. Mit einem solchen Abstand beziehungsweise Tiefe der Aufnahme ist genügend Raum geschaffen, in dem ein geeignetes Heizelement angeordnet werden kann. Der Abstand beträgt bevorzugt mindestens 1 cm, ganz besonders bevorzugt mindestens 2 cm.

Es ist besonders bevorzugt, dass zumindest der erste Teil Blechlagen oder der zweite Teil Blechlagen eine katalytisch aktive Beschichtung aufweist. Mit einer katalytischen Beschichtung ist die Umsetzung der Schadstoffe im Abgas gewährleistet. Insbesondere ist bevorzugt, dass beide Blechlagen die gleiche Beschichtung aufweisen, zumindest betrachtet in einem Querschnitt des Wabenkörpers. In axialer Richtung können verschiedene Beschichtungszonen ausgebildet sein.

Gemäß einer vorteilhaften Weiterbildung der Erfindung wird eine Abgasbehandlungsvorrichtung vorgeschlagen, bei der zwei oder mehr Aufnahmen in einem Wabenkörper ausgebildet werden, in denen jeweils ein Heizelement angeordnet ist. Das bedeutet also, dass zwei oder mehr Gruppen von Blechlagen mit einem ersten Teil Blechlagen und einem zweiten Teil Blechlagen ausgebildet sind, wobei jede Gruppe Blechlagen eine Aufnahme aufweist. Die Gruppen von Blechlagen werden insbesondere bei der Herstellung übereinander gestapelt und anschließend gemeinsam gewickelt. Auf diese Weise können die Heizelemente gleichmäßig über den Querschnitt des Wabenkörpers verteilt werden.

In diesem Zusammenhang ist auch bevorzugt, dass die Heizelemente elektrisch in Reihe geschaltet sind. Dies wird bevorzugt dadurch erreicht, dass Anschlüsse für die Heizelemente aus dem Wabenkörper radial nach außen geführt werden und dort elektrisch leitend miteinander kontaktiert werden. Insbesondere sind dabei die Anschlüsse elektrisch isoliert gegenüber dem Wabenkörper oder einem den Wabenkörper aufnehmenden Rohr.

Es ist ferner vorteilhaft, wenn zwei oder mehr Wabenkörper in axialer Richtung hintereinander angeordnet sind, wobei jeder Wabenkörper mindestens ein Heizelement aufweist. Dies ist insbesondere dann vorteilhaft, wenn mehrere Heizelemente in einem Wabenkörper, den Strömungswiderstand des Wabenkörpers zu sehr erhöhen würden.

In diesem Zusammenhang ist besonders bevorzugt, dass die Heizelemente elektrisch in Reihe geschaltet sind. Dies kann dadurch erfolgen, dass Anschlüsse für die Heizelemente aus den Wabenkörpern hinausgeführt werden und dort elektrisch miteinander verbunden werden. Auch in diesem Fall sind die Anschlüsse insbesondere elektrisch isoliert gegenüber dem Wabenkörper oder einem den Wabenkörper aufnehmenden Rohr. Das Herausführen von Anschlüssen für die Heizelemente aus dem Wabenkörper hat außerdem den Vorteil, dass einzelne Heizelemente überbrückt, parallel geschaltet oder zeitlich unterschiedlich mit Strom beaufschlagt werden können.

Die Erfindung sowie das technische Umfeld werden im Folgenden anhand der Figuren näher erläutert. Es ist darauf hinzuweisen, dass die Figuren besonders bevorzugte Ausführungsformen der Erfindung zeigen und diese nicht darauf beschränken. Es zeigen schematisch:
- Figur 1:: Perspektivisch einen Wabenkörper gemäß dem Stand der Technik,
- Figur 2:: einen Längsschnitt durch einen erfindungsgemäßen Wabenkörper,
- Figur 3:: einen weiteren Querschnitt durch einen weiteren erfindungsgemäßen Wabenkörper und
- Figur 4:: eine Ausführungsform einer Abgasbehandlungsvorrichtung.

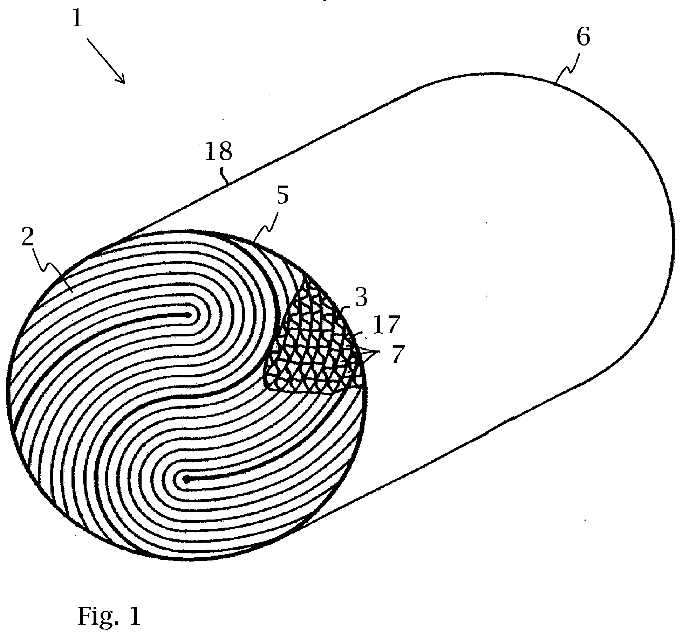

Figur 1 zeigt perspektivisch eine Abgasbehandlungsvorrichtung 1 mit einem Wabenkörper 2 aus dem Stand der Technik in einer Abgasleitung 18. Der Wabenkörper 2 umfasst eine Vielzahl von glatten Blechlagen 3 und gewellten Blechlagen 17, die übereinander gestapelt und aufgewickelt sind. Die Blechlagen 3, 17 bilden eine Vielzahl von Durchströmungskanälen 7 aus, die sich von einer Einlassseite 5 zu einer Auslassseite 6 erstrecken. Dieser Wabenkörper ist stellvertretend für alle aus geschichteten Blechlagen aufgebauten Wabenkörper, bei denen die einzelnen Blechlagen mit beiden Enden am Mantelrohr anliegen. Eine solche Bauform eignet sich besonders für die vorliegende Erfindung, weil elektrische Anschlüsse für ein entlang den Blechlagen verlaufendes Heizelement dadurch leicht nach außen geführt werden können.

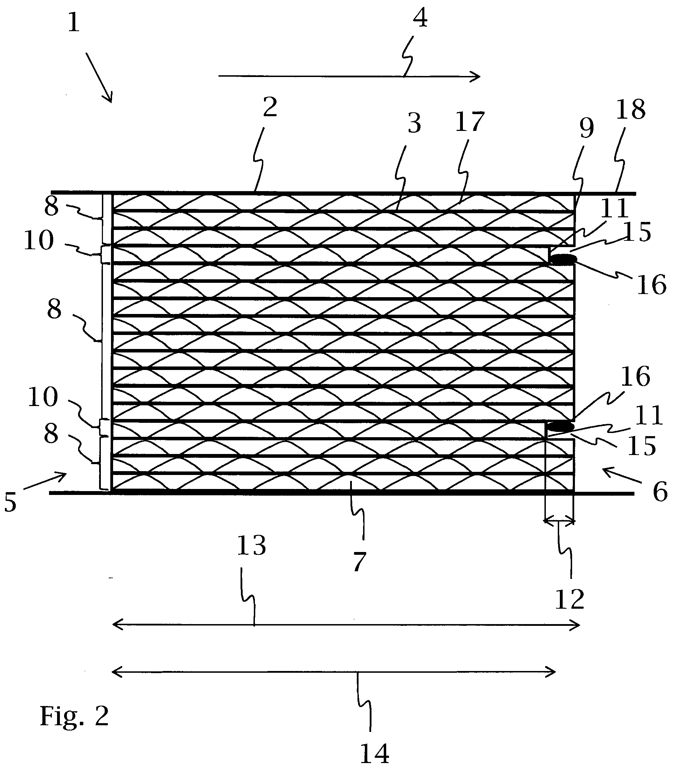

Figur 2 zeigt schematisch einen Längsschnitt durch eine Abgasbehandlungsvorrichtung 1 mit einem Wabenkörper 2, der in einer Abgasleitung 18 angeordnet ist. Der Wabenkörper 2 weist glatte Blechlagen 3 und gewellte Blechlagen 17 auf. Die Wellung der gewellten Blechlagen 17 ist hier nur schematisch (mit einer um 90° verdrehten Anordnung) angedeutet, um eine bessere Darstellung zu erreichen. Die Wellung erstreckt sich vielmehr in Umfangsrichtung des Wabenkörpers 2, so dass mit den axial verlaufenden Wellenbergen und Wellentäler Kanäle 7 in axialer Richtung 4 ausgebildet werden, durch die das Abgas von einer Einlassseite 5 zu einer Auslassseite 6 strömen kann, wie es in Fig. 1 dargestellt ist. Die Blechlagen 3, 17 sind in einem ersten Teil 8 Blechlagen und einem zweiten Teil 10 Blechlagen eingeteilt. Der erste Teil 8 Blechlagen bildet an der Auslassseite 6 bündig eine erste Stirnfläche 9 und der zweite Teil 10 Blechlagen bildet eine zweite Stirnfläche 11 an der Auslassseite 6. Die erste Stirnfläche 9 weist einen Abstand 12 zu der zweiten Stirnfläche 11 auf. Der Abstand 12 wird erreicht, indem der erste Teil 8 Blechlagen eine erste Länge 13 in einer axialen Richtung 4 aufweist, die größer ist als eine zweite Länge 14 des zweiten Teils 10 Blechlagen. Durch den Abstand 12 zwischen der ersten Stirnfläche 9 und der zweiten Stirnfläche 11 wird eine Aufnahme 15 gebildet, in der ein Heizelement 16 angeordnet ist. Das Heizelement 16 weist Anschlüsse auf, mit denen es an eine Spannungsquelle anschließbar ist.

Im Betrieb wird durch Anlegen einer Spannung an das Heizelement 16 dieses durch Ohm'sche Widerstandserwärmung aufgeheizt, wodurch wiederum der Wabenkörper 2 beziehungsweise das Abgas erhitzt wird. Auf diese Weise kann zu jedem Zeitpunkt das Abgas auf eine Temperatur oberhalb der für eine katalytische Reaktion erforderlichen Temperatur erhöht werden.

In diesem Ausführungsbeispiel weist der erste Teil 8 der Blechlagen sowohl glatte Blechlagen 3 als auch gewellte Blechlagen 17 auf. Der zweite Teil 10 der Blechlagen weist hingegen nur jeweils eine gewellte Blechlage 17 auf. Die Aufnahme 15 ist somit nach oben und unten von einer glatten Blechlage 3 begrenzt.

Die in diesem Ausführungsbeispiel angedeutete Strömungsrichtung in axialer Richtung 4 ist nur beispielhaft und kann auch entgegen der hier dargestellten axialen Richtung ausgeprägt sein. Entsprechend würden die Einlassseite 5 und die Auslassseite 6 vertauscht sein.

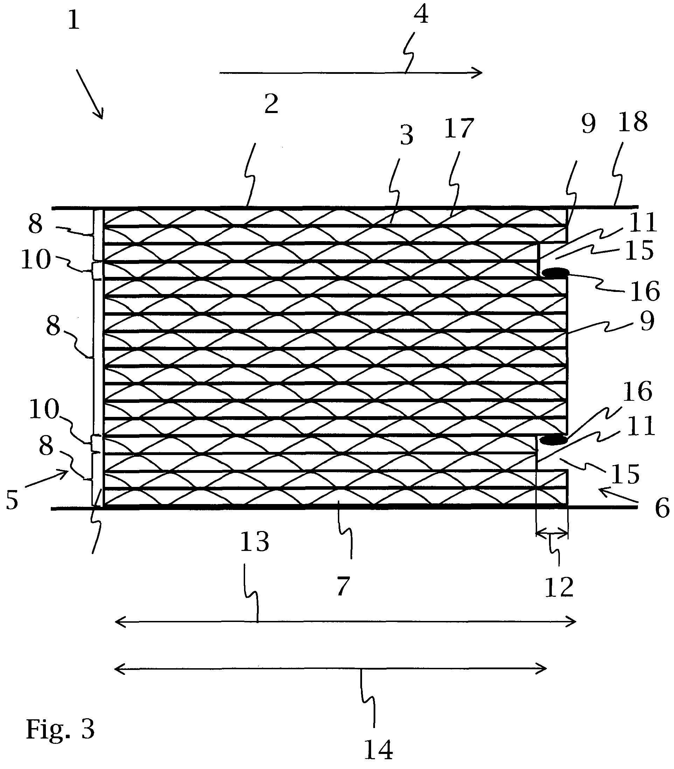

Figur 3 zeigt schematisch eine weitere Ausführungsform der Abgasbehandlungsvorrichtung 1 in einem Längsschnitt. Im Folgenden wird nur auf die Unterschiede zu der Ausführungsfigur in Figur 2 eingegangen. In der Ausführungsform gemäß Figur 3 weist der zweite Teil 10 der Blechlagen sowohl zwei gewellte Blechlagen 17 als auch eine glatte Blechlage 3 auf. Hiermit ist die Ausdehnung der Aufnahme 15 quer zur Strömungsrichtung größer.

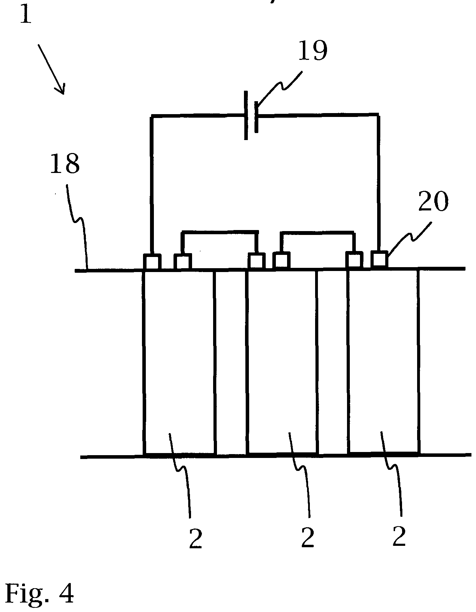

Figur 4 zeigt schematisch eine weitere Ausführungsform einer Abgasbehandlungsvorrichtung 1. Die Abgasbehandlungsvorrichtung 1 weist drei Wabenkörper 2 auf, die in einer Abgasleitung 18 in axialer Richtung hintereinander für ein Abgas durchströmbar angeordnet sind. Die Wabenkörper 2 sind wie die in den Figuren 2 oder 3 gezeigten Wabenkörper 2 aufgebaut. Die Abgasbehandlungsvorrichtung 1 weist zudem eine Spannungsquelle 19 auf, die über Leitungen mit jeweils einem Anschluss 20 des ersten und dritten Wabenkörpers 2 verbunden ist. Die Anschlüsse 20 sind elektrisch isoliert durch die Abgasleitung 18 geführt und kontaktieren die hier nicht gezeigten Heizelemente 16 der Wabenkörper 2. Die Heizelemente 16 sind somit wie hier dargestellt elektrisch in Reihe geschaltet. Eine andere Zusammenschaltung ist jedoch nachträglich leicht möglich.

Mit der vorliegenden Erfindung kann auf einfache Weise eine elektrisch beheizbare Abgasbehandlungsvorrichtung 1 hergestellt werden, in die während oder nach der Herstellung des Wabenkörpers 2 ein Heizelement 16 integriert werden kann.

Auch wenn in den jeweiligen Figuren Ausführungsbeispiele gezeigt sind, die jeweils eine Vielzahl von technischen Merkmalen miteinander vereinen, so ist für den Fachmann klar, dass auch einzelne Merkmale separat mit anderen Ausgestaltungen der Abgasbehandlungsvorrichtung kombinierbar sind. Hiervon ist jedenfalls dann davon auszugehen, soweit oben nicht eindeutig und explizit auf einen zwingenden Zusammenschluss von Merkmalen hingewiesen wurde. Insbesondere sind Ausführungen zu den Prinzipdarstellungen (wie beispielsweise in Figur 1 und 4) mit den Details aus den anderen Figuren kombinierbar.

### Bezugszeichenliste

- 1: Abgasbehandlungsvorrichtung
- 2: Wabenkörper
- 3: glatte Blechlage
- 4: axiale Richtung
- 5: Einlassseite
- 6: Auslassseite
- 7: Kanal
- 8: erster Teil
- 9: erste Stirnfläche
- 10: zweiter Teil
- 11: zweite Stirnfläche
- 12: Abstand
- 13: erste Länge
- 14: zweite Länge
- 15: Aufnahme
- 16: Heizelement
- 17: gewellte Blechlage
- 18: Abgasleitung
- 19: Spannungsquelle
- 20: Anschluss

## Patentansprüche

1. Abgasbehandlungsvorrichtung (1) mit einem von einem Abgas durchströmbaren Wabenkörper (2), der mit zumindest teilweise strukturierten Blechlagen so gewickelt oder gestapelt ist, dass für ein Abgas in axialer Richtung (4) von einer Einlassseite (5) zu einer Auslassseite (6) durchströmbare Kanäle (7) gebildet werden, wobei ein erster Teil (8) der Blechlagen an einer zumindest der Einlassseite (5) oder der Auslassseite (6) zugeordneten ersten Stirnfläche (9) bündig endet und ein zweiter Teil (10) der Blechlagen an einer ebenfalls zumindest der Einlassseite (5) oder der Auslassseite (6) zugeordneten zweiten Stirnfläche (11) endet, wobei die zweite Stirnfläche (11) einen Abstand (12) zu der ersten Stirnfläche (9) aufweist, indem eine erste Länge (13) in axialer Richtung (4) des ersten Teils (8) Blechlagen größer ist als eine zweite Länge (14) in axialer Richtung (4) des zweiten Teils (10) Blechlagen, wobei durch den Abstand (12) zwischen der ersten Stirnfläche (9) und der zweiten Stirnfläche (11) eine Aufnahme (15) ausgebildet wird, in der ein Heizelement (16) angeordnet ist,
wobei die Blechlagen abwechselnd angeordnete glatte Blechlagen (3) und gewellte Blechlagen (17) aufweisen, **dadurch gekennzeichnet, daß** der zweite Teil (10) der Blechlagen nur gewellte Blechlagen (17) umfasst.

2. Abgasbehandlungsvorrichtung (1) nach Anspruch 1, wobei das Heizelement (16) die zweite Stirnfläche (11), bei Sicht in Strömungsrichtung, nur zu einem geringen Teil nämlich zu höchstens 50 % überdeckt.

3. Abgasbehandlungsvorrichtung (1) nach einem der vorhergehenden Ansprüche, wobei das Heizelement (16) an einer Blechlage des ersten Teils (8) der Blechlagen befestigt ist.

4. Abgasbehandlungsvorrichtung (1) nach einem der vorhergehenden Ansprüche, wobei der Abstand (12) zwischen der ersten Stirnfläche (9) und der zweiten Stirnfläche (11) mindestens 0,1 cm beträgt.

5. Abgasbehandlungsvorrichtung (1) nach einem der vorhergehenden Ansprüche, wobei zumindest der erste Teil (8) der Blechlagen oder der zweite Teil (10) der Blechlagen eine katalytisch aktive Beschichtung aufweist.

6. Abgasbehandlungsvorrichtung (1) nach einem der vorhergehenden Ansprüche, wobei zwei oder mehr Aufnahmen (15) in einem Wabenkörper (2) ausgebildet werden, in denen jeweils ein Heizelement (16) angeordnet ist.

7. Abgasbehandlungsvorrichtung (1) nach Anspruch 6, wobei die Heizelemente (16) elektrisch in Reihe geschaltet sind.

8. Abgasbehandlungsvorrichtung (1) nach einem der vorhergehenden Ansprüche, wobei zwei oder mehr Wabenkörper (2) in axialer Richtung (4) hintereinander angeordnet sind und jeder Wabenkörper (2) mindestens ein Heizelement (16) aufweist.

9. Abgasbehandlungsvorrichtung (1) nach Anspruch 8, wobei jeder Wabenkörper (2) mindestens ein Heizelement (16) aufweist und die Heizelemente (16) elektrisch in Reihe geschaltet sind.

## Claims

1. Exhaust-gas treatment device (1) having a honeycomb body (2) through which an exhaust gas can flow and which is wound or stacked with at least partially structured sheet-metal layers such that ducts (7) are formed through which an exhaust gas can flow in an axial direction (4) from an inlet side (5) to an outlet side (6), wherein a first proportion (8) of the sheet-metal layers ends flush at a first end surface (9) assigned at least to the inlet side (5) or to the outlet side (6), and a second proportion (10) of the sheet-metal layers ends at a second end surface (11) likewise assigned at least to the inlet side (5) or to the outlet side (6), wherein the second end surface (11) has a spacing (12) to the first end surface (9) by virtue of a first length (13), in the axial direction (4), of the first proportion (8) of sheet-metal layers being greater than a second length (14), in the axial direction (4), of the second proportion (10) of sheet-metal layers, wherein, owing to the spacing (12) between the first end surface (9) and the second end surface (11), a receptacle (15) is formed, in which receptacle there is arranged a heating element (16), wherein the sheet-metal layers have alternately arranged smooth sheet-metal layers (3) and corrugated sheet-metal layers (17), **characterized in that** the second proportion (10) of the sheet-metal layers comprises only corrugated sheet-metal layers (17).

2. Exhaust-gas treatment device (1) according to Claim 1, wherein the heating element (16) covers, as viewed in the flow direction, only a small part, namely at most 50%, of the second end surface (11).

3. Exhaust-gas treatment device (1) according to one of the preceding claims, wherein the heating element (16) is fastened to a sheet-metal layer of the first proportion (8) of the sheet-metal layers.

4. Exhaust-gas treatment device (1) according to one of the preceding claims, wherein the spacing (12) between the first end surface (9) and the second end surface (11) is at least 0.1 cm.

5. Exhaust-gas treatment device (1) according to one of the preceding claims, wherein at least the first proportion (8) of the sheet-metal layers or the second proportion (10) of the sheet-metal layers has a catalytically active coating.

6. Exhaust-gas treatment device (1) according to one of the preceding claims, wherein two or more receptacles (15) are formed in a honeycomb body (2), in each of which receptacles there is arranged a heating element (16).

7. Exhaust-gas treatment device (1) according to Claim 6, wherein the heating elements (16) are connected electrically in series.

8. Exhaust-gas treatment device (1) according to one of the preceding claims, wherein two or more honeycomb bodies (2) are arranged in series in the axial direction (4), and each honeycomb body (2) has at least one heating element (16).

9. Exhaust-gas treatment device (1) according to Claim 8, wherein each honeycomb body (2) has at least one heating element (16), and the heating elements (16) are connected electrically in series.

## Revendications

1. Dispositif (1) de traitement des gaz d'échappement, comprenant un corps (2) en nid-d'abeilles, dans lequel peuvent passer des gaz d'échappement et qui est enroulé ou empilé par des couches de tôle structurées au moins en partie, de manière à former des conduits (7), dans lesquels des gaz d'échappement peuvent passer dans une direction (4) axiale d'un côté (5) d'entrée à un côté (6) de sortie, une première partie (8) des couches de tôle se terminant à affleurement d'une première surface (9) frontale associée au moins au côté (5) d'entrée ou au côté (6) de sortie et une deuxième partie (10) des couches de tôle se terminant à une deuxième surface (11) frontale associée également à au moins le côté (5) d'entrée ou le côté (6) de sortie, la deuxième surface (11) frontale étant à distance (12) de la première surface (9) frontale par le fait qu'une première longueur (13) dans la direction (4) axiale de la première partie (8) de couches de tôle est plus grande qu'une deuxième longueur (14) dans la direction (4) axiale de la deuxième partie (10) de couches de tôle, dans lequel il est formé, par la distance (12) entre la première surface (9) frontale et la deuxième surface (11) frontale, un logement (15), dans lequel est disposé un élément (16) de chauffage .
dans lequel les couches de tôle ont, disposées en alternance, des couches (3) de tôle lisses et des couches (17) de tôle ondulées, **caractérisé en ce que** la deuxième partie (10) des couches de tôle ne comprend que des couches (17) de tôle ondulées.

2. Dispositif (1) de traitement des gaz d'échappement suivant la revendication 1, dans lequel l'élément (16) de chauffage ne recouvre qu'une partie petite, à savoir au plus 50%, de la deuxième surface (11) frontale, telle que vue dans le sens du courant.

3. Dispositif (1) de traitement des gaz d'échappement suivant l'une des revendications précédentes, dans lequel l'élément (16) de chauffage est fixé à une couche de tôle de la première partie (8) des couches de tôle.

4. Dispositif (1) de traitement des gaz d'échappement suivant l'une des revendications précédentes, dans lequel la distance (12) entre la première surface (9) frontale à la deuxième surface (11) frontale est d'au moins 0,1 cm.

5. Dispositif (1) de traitement des gaz d'échappement suivant l'une des revendications précédentes, dans lequel au moins la première partie (8) de couches de tôle ou la deuxième partie (10) des couches de tôle a un revêtement actif catalytiquement.

6. Dispositif (1) de traitement des gaz d'échappement suivant l'une des revendications précédentes, dans lequel il est formé deux ou plusieurs logements (15) dans un corps (12) en nid-d'abeilles, dans lesquels est disposé respectivement un élément (16) de chauffage.

7. Dispositif (1) de traitement des gaz d'échappement suivant la revendication 6, dans lequel les éléments (16) de chauffage sont montés électriquement en série.

8. Dispositif (1) de traitement des gaz d'échappement suivant l'une des revendications précédentes, dans lequel deux ou plusieurs corps (2) en nid-d'abeilles sont disposés les uns derrière les autres dans la direction (4) axiale et chaque corps (2) en nid-d'abeilles a au moins un élément (16) de chauffage.

9. Dispositif (1) de traitement des gaz d'échappement suivant la revendication 8, dans lequel chaque corps (2) en nid-d'abeilles a au moins un élément (16) de chauffage et les éléments (16) de chauffage sont montés électriquement en série.
